# EUROPÄISCHE PATENTSCHRIFT

(11) **EP 3 592 676 B1**
(45) Veröffentlichungstag und Bekanntmachung des Hinweises auf die Patenterteilung: **09.03.2022**
(21) Anmeldenummer: 18702259.5
(22) Anmeldetag: 29.01.2018
(51) Int. Cl.: B65G 47/86, B67C 7/00

(54) **GREIF- UND TRANSPORTVORRICHTUNG**
GRIPPING AND TRANSPORTING DEVICE
DISPOSITIF DE PRÉHENSION ET DE TRANSPORT

(30) Priorität: 09.03.2017 DE 102017105015
(43) Veröffentlichungstag der Anmeldung: 15.01.2020
(73) Patentinhaber: Tyrolon-Schulnig GmbH, 6395 Hochfilzen (AT)
(72) Erfinder: SCHULNIG, Elmar, 6391 Fieberbrunn (AT); SCHULNIG, Ludwig, 6392 St. Jakob in Haus (AT)
(74) Vertreter: Rupprecht, Kay
(86) Internationale Anmeldenummer: PCT/EP2018/052095
(87) Internationale Veröffentlichungsnummer: WO 2018/162145

(56) Entgegenhaltungen:
- CN-A- 104 108 601
- DE-A1- 19 903 319
- JP-A- 2008 156 054
- US-A1- 2011 114 454

## Beschreibung

Die Erfindung betrifft eine Greif- und Transportvorrichtung zum Greifen, Halten und Führen von insbesondere flaschenartigen Behältern mittels Greifarmpaaren.

Unter dem Begriff "Behälter" sind im Zusammenhang mit der vorliegenden Erfindung insbesondere, aber nicht ausschließlich Behälter mit einem im Wesentlichen kreisförmigen Querschnitt zu verstehen, z.B. Flaschen oder Dosen oder Gläser, die jeweils den Anforderungen entsprechend aus Glas, Metall oder Kunststoff bestehen.

Ein derartiges, in einer Greif- und Transportvorrichtung verwendetes Greifarmpaar weist insbesondere, aber nicht ausschließlich einen ersten Greifarm und einen zweiten Greifarm auf, die durch eine Zangenbewegung einen Behälter greifen und durch eine form- und/oder kraftschlüssige Verbindung mit dem Behälter zwischen den beiden Greifarmen diesen Behälter halten, transportieren und führen können. Hierbei ist der zweite Greifarm insbesondere gegengleich zum ersten Greifarm ausgebildet. Bei der Zangenbewegung bewegt sich das Greifarmpaar von einer Öffnungsstellung in eine Greifstellung, wobei in der Öffnungsstellung ein Behälter zwischen den gespreizten bzw. beabstandeten Greifarmen positioniert werden kann und die Greifarme in der Greifstellung entweder einen Behälter greifen und halten oder, ohne einen zwischen den Greifarmen angeordneten Behälter, geschlossen sind und sich insbesondere berühren können.

In der Getränkeindustrie ist die Verwendung derartiger Greif- und Transportvorrichtungen, auch als Transport- oder Klammerstern bezeichnet, mit derartigen Greifarmpaaren, auch als Klammergreifer bezeichnet, bekannt. Hierbei ist es üblich, dass Flüssigkeiten wie beispielsweise Wasser, Säfte, Bier, etc. in Behältern, insbesondere Flaschen, zumindest im industriellen Umfang in Verarbeitungsstraßen bzw. Getränkeabfüllanlagen oder Behälterabfüll- und Transportsystemen abgefüllt und verschlossen werden. Eine Verarbeitungsstraße besteht üblicherweise aus einer Reinigungsanlage für die Behälter, einer Abfüllanlage zum Einfüllen der Flüssigkeit in die Behälter und einer Verschließanlage, die die Behälter verschließt. Die unterschiedlichen Anlagen sind mittels Zubringersystemen miteinander verbunden, die als Fließbänder, Transportsterne, etc. ausgebildet sein können.

Eine Greif- und Transportvorrichtung kann um eine Achse rotieren und weist am Rand einer insbesondere kreisförmigen Trägerplatte eine Vielzahl von Klammergreifern auf. Die Trägerplatte ist um die Achse rotierbar, wobei die Klammergreifer einen Behälter an insbesondere zur Trägerplatte tangential verlaufenden Transportflüssen der Behälter greifen und freigeben und zwischen diesen Punkten den Behälter entlang eines Kreisbogens transportieren.

Zwar sind Greifarmpaare auf Grund der Zangenbewegung geeignet, Behälter verschiedener Größen und Formen zu greifen; allerdings existieren Grenzen, die sowohl durch die Eigenschaften der Behälter als auch durch die Form und Größe der Greifarmpaare bedingt sind. Werden diese Grenzen überschritten, können zu kleine oder zu große Behälter, insbesondere mit einer unterschiedlichen Form, nicht mehr stabil gegriffen und gehalten werden. Daher kann es notwendig sein, die Greifarmpaare bei der Anpassung einer Verarbeitungsstraße auf einen neuen Behältertyp auszutauschen, welche die neuen Behälter problemlos halten können.

Bei den oben genannten Situationen, in denen die Greifarme ausgetauscht werden müssen, werden die Anlagen gestoppt und die entsprechenden Greifarme händisch ausgetauscht. Diese geplanten Betriebsunterbrechungen haben eine negative Auswirkung auf den Umsatz des die Transportsterne oder ähnliche, mit Greifarmen ausgestattete Anlagen betreibenden Unternehmens und sollten daher so kurz wie möglich ausfallen.

Aus der US 2011/0 114 454 A1 ist eine rotierende Greif- und Transportvorrichtung der vorstehend und im Oberbegriff des Patentanspruchs 1 beschriebenen Art bekannt, bei der die Stellplatte gegenüber der Trägerplatte entlang einer Rotationsachse höhenverstellbar ist. Des Weiteren ist aus der US 9 181 043 B1 ebenso eine rotierende Greif- und Transportvorrichtung mit einer oberen und einer unteren Trägerplatte bekannt, welche jeweils mit Greifeinrichtungen für insbesondere flaschenartige Behälter versehen sind, wobei die obere Trägerplatte gegenüber der unteren Trägerplatte höhenverstellbar ist.

DE 199 03 319 A1 bezieht sich auf einen Flaschenzu- und -abführdrehstern mit einer Vielzahl von auf einer Umfangslinie des Sterns angeordneten Zellen und mit je nach Flaschenformat veränderbaren Abmessungen. Der Stern umfasst pro Zelle eine Vielzahl von an dem Stern angelenkten Hebeln. Diese Hebel werden von einer Antriebsvorrichtung gleichzeitig in Drehung versetzt, so dass sich mindestens vier Berührungspunkte zwischen der Flasche und den Hebeln bilden. Zwei der Hebel jeder Zelle sind mittels eines vertikal verschiebbaren Halters höhenverstellbar, um verschieden große Flaschen greifen zu können. Insbesondere betrifft DE 199 03 319 A1 eine Greif- und Transportvorrichtung nach dem Oberbegriffs des Anspruchs 1.

Es ist daher die Aufgabe der vorliegenden Erfindung, eine Greif- und Transportvorrichtung zu konzipieren, die die aus dem Stand der Technik bekannten Nachteile behebt oder zumindest minimiert.

Diese Aufgabe wird erfindungsgemäß durch eine Greif- und Transportvorrichtung nach Anspruch 1 gelöst. Danach ist eine Greif- und Transportvorrichtung zum Greifen, Halten, Führen und Transportieren von insbesondere flaschenartigen Behältern mit einer Trägerplatte und einer Stellplatte, die um eine Rotationsachse der Vorrichtung rotierbar sind, vorgesehen. Die Vorrichtung weist wenigstens eine Behältergreifeinrichtung mit mindestens einem ersten Greifarmpaar, mindestens einem zweiten Greifarmpaar und mit einem Steuernocken als Öffnungs- oder Schließmittel der Greifarmpaare der wenigstens einen Behältergreifeinrichtung auf, wobei das mindestens eine erste Greifarmpaar an der Trägerplatte und das mindestens eine zweite Greifarmpaar an der Stellplatte schwenkbar befestigt sind. Des Weiteren sind die Greifarmpaare der wenigstens einen Behältergreifeinrichtung mittels den zugeordneten Steuernocken von einer Greifstellung in eine Öffnungsstellung oder umgekehrt bewegbar. Die Greif- und Transportvorrichtung ist dadurch gekennzeichnet, dass die Trägerplatte einen ersten Hohlkörper und die Stellplatte einen zweiten Hohlkörper aufweisen, wobei die Stellplatte gegenüber der Trägerplatte entlang der Rotationsachse höhenverstellbar ist. Zusätzlich sind der erste und zweite Hohlkörper zur Rotationsachse der Vorrichtung koaxial angeordnet und bei einer Höhenverstellung der Stellplatte ineinander verschiebbar.

Diese Greif- und Transportvorrichtung hat den Vorteil, Behälter verschiedener Größen und/oder Formen greifen und halten zu können, ohne die Greifarmpaare auszutauschen. Die Höhenverstellung erlaubt es, die Greifarmpaare unterschiedlich zu positionieren und somit unterschiedliche Behälter zu greifen und zu halten. Dadurch entfällt ein mühseliger und zeitaufwändiger Austausch der Greifarmpaare oder eine Anpassung der relevanten Greif- und Transportvorrichtung/en. Somit werden Betriebsunterbrechungen zeitlich reduziert oder können komplett entfallen.

Die Hohlkörper haben den Vorteil, die Innenmechanik und etwaige Steuer-und/oder Antriebskomponenten vor äußeren Einflüssen, wie z.B. bei den zu reinigenden und abzufüllenden Behältern vor den entsprechenden Reinigungs- und Getränkeflüssigkeiten, zu schützen. Somit werden Geräteausfälle oder Fehlfunktionen auf Grund von Verschmutzungen durch Flüssigkeiten oder Schmutz merklich reduziert. Die Anzahl entsprechender Wartungen der relevanten Vorrichtungen und die damit verbundenen Kosten können dadurch ebenfalls gesenkt werden. Durch die koaxiale Anordnung der Hohlkörper zur Rotationsachse wird eine diesbezügliche Unwucht beim Rotieren der Greif- und Transportvorrichtung vermieden. Somit können Abnutzungen der Bauteile und Komponenten der Vorrichtung und die damit verbundenen Fehlfunktionen reduziert werden.

Des Weiteren hat die Verschiebbarkeit der Hohlkörper ineinander den Vorteil, dass die innerhalb der Hohlkörper angeordnete oder zugängige Innenmechanik und anderweitige Komponenten selbst bei einer Höhenverstellung des zweiten Hohlkörpers stets vor äußeren Einflüssen oder Eingriffen geschützt bleiben.

Im Folgenden werden bevorzugte Ausführungsformen der Erfindung erläutert, wie sie in den Unteransprüchen angegeben sind.

Erfindungsgemäß sind die Hohlkörper als Hohlzylinder, mit gleicher Höhe, ausgebildet. Ein Hohlzylinder ist im Vergleich zu anderen Formen von Hohlkörpern leichter herstellbar und somit kostengünstiger. Damit die Hohlkörper ineinander vollständig verschiebbar sind, aber gleichzeitig einen maximalen Hub bzw. eine maximale Verschiebbarkeit erlauben, haben die Hohlkörper vorzugsweise die gleiche Höhe.

In einer weiteren vorteilhaften Ausgestaltung sind die Hohlkörper rotationssymmetrisch ausgebildet und weisen Führungsmittel auf, die zwischen den Hohlkörpern gegenseitig formschlüssig in Wirkeingriff stehen und ein gegenseitiges Verdrehen der Hohlkörper unterbinden. Dadurch weisen die Trägerplatte und die Stellplatte stets die gleiche Rotationsgeschwindigkeit auf und es kommt zu keinem Versatz zwischen den ersten und den zweiten Greifarmpaaren einer jeweiligen Behältergreifeinrichtung. Diese Führungsmittel können in Form von einem Nut-Feder-System oder einem Schienensystem realisiert sein. Bei Hohlkörpern mit polygonalem Querschnitt, zumindest mit keinem rotationssymmetrischen Querschnitt, bildet deren Form bereits einen Formschluss untereinander, weshalb zusätzlich ausgebildete/angeordnete Führungsmittel nicht notwendig, aber möglich sind. Ebenso können die Führungsmittel derart ausgebildet sein, dass bei der Höhenverstellung der Hohlkörper kein gegenseitiges Verkanten erfolgt; hierzu könnten die Führungsmittel und/oder Hohlkörper mit Schmiermittel ausgestattet oder versorgt werden.

Des Weiteren kann die Greif- und Transportvorrichtung zusätzlich einen dritten Hohlkörper aufweisen, der zwischen dem ersten und zweiten Hohlkörper anordbar und axial verlagerbar und angepasst ist, vom zweiten Hohlkörper ab einem vorbestimmten Punkt angehoben zu werden. Dadurch ist ein Teleskop-ähnliches Ausfahren der Hohlkörper beim Höhenverstellen der Stellplatte und somit eine größere Höhenverstellung bzw. Hub möglich. Weiterhin besteht die Möglichkeit, eine Vielzahl von dritten Hohlkörpern bei der Greif- und Transportvorrichtung hinzuzufügen, um die maximale Hubhöhe zu vergrößern.

Erfindungsgemäß kann die Greif- und Transportvorrichtung einen Linearantrieb zur Höhenverstellung der Stellplatte aufweisen, wobei der Linearantrieb innerhalb des ersten Hohlkörpers an der Trägerplatte befestigt und mit dem zweiten Hohlkörper fest verbunden ist. Dies hat den Vorteil, dass ein mechanischer und steuerbarer Antrieb die Höhenverstellung vereinfacht. Der Linearantrieb kann elektrisch, pneumatisch, hydraulisch und/oder manuell betrieben bzw. angetrieben werden.

Ebenso ist es von Vorteil, wenn der Linearantrieb eine Hubwelle aufweist, die koaxial zur Rotationsachse der Vorrichtung angeordnet und an einer Abdeckung des zweiten Hohlkörpers befestigt ist. Durch die koaxiale Anordnung werden eine Unwucht und ein Verkippen bzw. Verkanten des angehobenen zweiten Hohlkörpers vermieden bzw. zumindest die Wahrscheinlichkeit eines derartigen Vorfalls reduziert. Es besteht auch die Möglichkeit, eine Vielzahl von Hubwellen beim Linearantrieb zu verwenden, wobei diese konzentrisch um eine Rotationsachse angeordnet sein sollten.

Des Weiteren hat es sich als vorteilhaft herausgestellt, wenn die Länge des Steuernockens der wenigstens einen Behältergreifeinrichtung größer als ein maximaler Hub der Stellplatte bei der Höhenverstellung ist. Dadurch soll sichergestellt werden, dass in jeder Höhenstellung sowohl die ersten als auch die zweiten Greifarmpaare stets durch den Steuernocken angesteuert werden können.

In einer weiteren vorteilhaften Ausführungsform weist die Trägerplatte mindestens eine Lageraufnahme für den Steuernocken der mindestens einen Behältergreifeinrichtung auf, um den Steuernocken drehbar lagernd zu befestigen. Da die Trägerplatte nicht angehoben wird, bildet sie eine gute und stabile Ausgangsposition zur Befestigung der Steuernocken. Da auch ein entsprechendes Betätigungselement, in bevorzugter Ausführungsform eine Klaue, für die Steuernocken am unteren Ende des Steuernockens angeordnet ist, hat die Befestigung den Vorteil, dass Hebelkräfte beim Schwenken des Steuernockens leichter kompensiert werden und somit der Steuernocken nicht verkippen kann.

Vorzugsweise weist die Stellplatte und/oder das mindestens eine zweite Greifarmpaar mindestens eine Führungsaufnahme für den Steuernocken der mindestens einen Behältergreifeinrichtung auf, um den Steuernocken drehbar lagernd axial zu führen. Obwohl der Steuernocken derart befestigt ist, dass er nicht aus der Behältergreifeinrichtung herausfällt, kann es von Vorteil sein, wenn die angehobene Stellplatte eine Führungsaufnahme aufweist. Dadurch können etwaige Kippbewegung beim Betätigen des Steuernockens abgefangen werden; dies kann insbesondere bei einem hohen Hub der Stellplatte notwendig sein, um die zweiten Greifarmpaare betriebssicher zu steuern.

Es sind weitere bevorzugte Ausgestaltungsformen vorgesehen, die die nachfolgend erläuterten Merkmale aufweisen können, insbesondere in Verbindung mit den Merkmalen eines oder mehrerer Unteransprüche.

Die Behältergreifeinrichtung einer erfindungsgemäßen Greif- und Transportvorrichtung kann mehr als ein erstes und ein zweites Greifarmpaar aufweisen. So können auf der Trägerplatte mindestens zwei erste Greifarmpaare drehbar lagernd befestigt sein, die auf dem gleichen Lagerbolzen/-schrauben angeordnet sind und über einen gemeinsamen Steuernocken angesteuert werden. Auf der Stellplatte können zusätzlich oder alternativ mindestens zwei zweite Greifarmpaare drehbar lagernd befestigt sein, welche die gleichen Lagerelemente und den gleichen Steuernocken verwenden.

Die Erfindung wird nachfolgend anhand von einem bevorzugten Ausführungsbeispiel mit weiteren Einzelheiten unter Bezug auf die beigefügten schematischen Zeichnungen näher erläutert.

In diesen zeigen
- Fig. 1: eine perspektivische Ansicht einer Greif- und Transportvorrichtung gemäß der vorliegenden Erfindung;
- Fig. 2: eine Unteransicht der Greif- und Transportvorrichtung aus Fig. 1;
- Fig. 3: eine Draufsicht der Greif- und Transportvorrichtung aus Fig. 1;
- Fig. 4: eine Seitenansicht der Greif- und Transportvorrichtung aus Fig. 1 mit einer stark angehobenen Stellplatte;
- Fig. 5: eine Seitenansicht der Greif- und Transportvorrichtung aus Fig. 1 mit einer leicht angehobenen Stellplatte;
- Fig. 6: einen Querschnitt der Greif- und Transportvorrichtung aus Fig. 4;
- Fig. 7: einen Querschnitt der Greif- und Transportvorrichtung aus Fig. 5;
- Fig. 8: eine perspektivische Ansicht einer Trägerplatte einer Greif- und Transportvorrichtung aus Fig. 1;
- Fig. 9: eine perspektivische Ansicht eines ersten Hohlkörpers mit angeordnetem Linearantrieb einer Greif- und Transportvorrichtung aus Fig. 1;
- Fig. 10: eine perspektivische Ansicht eines zweiten Hohlkörpers mit Stellplatte einer Greif- und Transportvorrichtung aus Fig. 1;
- Fig. 11: eine weitere modifizierte Draufsicht der Greif- und Transportvorrichtung aus Fig. 3.

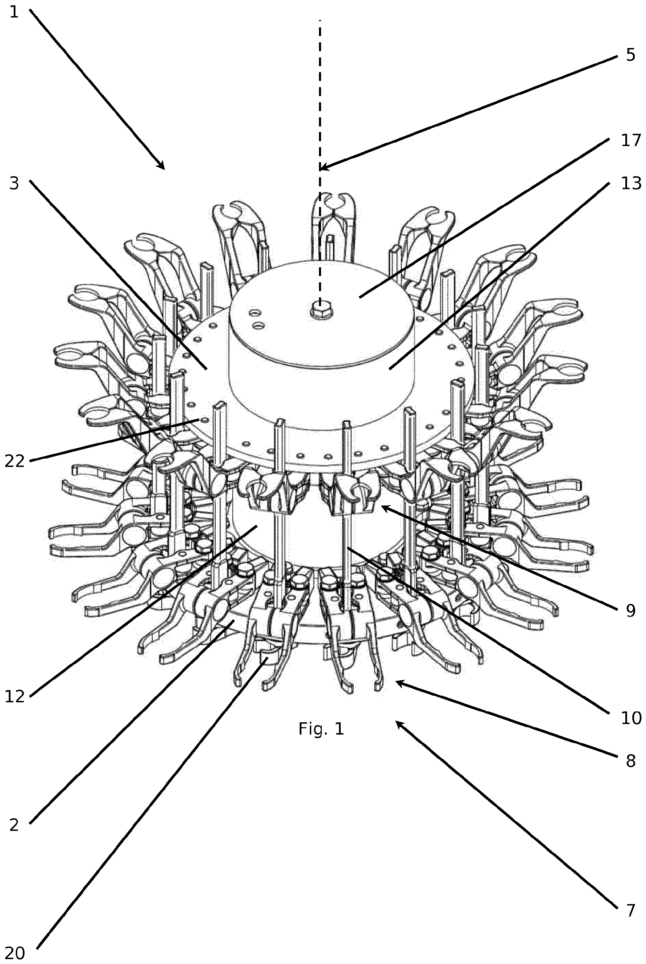

Fig. 1 zeigt eine perspektivische Ansicht einer Greif- und Transportvorrichtung 1 gemäß der vorliegenden Erfindung. Die Vorrichtung 1 weist eine Trägerplatte 2 und eine darüber und parallel angeordnete Stellplatte 3 auf, die beide kreisförmig ausgebildet sind. Zusätzlich ist die Vorrichtung 1 um die Rotationsachse 5 drehbar und wird über eine Antriebswelle (nicht dargestellt) in Drehung versetzt. Die Rotationsachse 5 bildet im Wesentlichen die Symmetrieachse der Vorrichtung 1 und somit eine Voraussetzung für die Anordnung und Ausbildung der einzelnen Elemente der Vorrichtung 1, damit eine Unwucht bei der Rotation der Vorrichtung 1 verhindert oder zumindest gedämpft wird. Auf der Oberseite der Trägerplatte 2 ist ein erster Hohlkörper 12 in Form eines Hohlzylinders achsensymmetrisch befestigt - in diesem Fall mit Schrauben (nicht sichtbar). In der Mitte der Stellplatte 3 ist ein zweiter Hohlkörper 13 in Form eines Hohlzylinders achsensymmetrisch befestigt, wobei die Stellplatte 3 auf ein Drittel der Höhe des Hohlkörpers angeordnet ist. Der zweite Hohlkörper 13 ist teilweise um den ersten Hohlkörper 12 angeordnet und kann vollständig über die Mantelfläche des ersten Hohlkörpers 12 verschoben werden. Auf der Oberseite des zweiten Hohlkörpers 13 ist eine Abdeckung 17 ausgebildet, um den Innenraum zu verdecken. Am Rand der Vorrichtung 1, insbesondere an den Rändern der Trägerplatte 2 und der Stellplatte 3, sind eine Vielzahl von Behältergreifeinrichtungen 7 angeordnet und befestigt. Diese Greifeinrichtungen 7 sind konzentrisch um die Rotationsachse 5 verteilt und erstrecken sich, parallel zur Rotationsachse 5. Eine Behältergreifeinrichtung 7 weist mindestens ein Steuerelement z.B. in Form eines Steuernockens 10, ein Betätigungselement z.B. in Form einer Betätigungsklaue 20 zum Schwenken des Steuernockens 10, mindestens ein erstes Greifarmpaar 8 und mindestens ein zweites Greifarmpaar 9 auf. Hierbei ist die Greifeinrichtung 7 geeignet, einen Behälter, insbesondere eine Flasche, an seiner Mantelfläche am unteren und oberen Endbereich zu Halten und zu Transportieren. Das erste Greifarmpaar 8 ist zum Greifen und Halten eines Flaschenbauchs, während das zweite Greifarmpaar 9 zum Greifen und Halten eines Flaschenhalses geeignet. Der Steuernocken 10 erstreckt sich senkrecht zwischen den beiden Platten 2 und 3, insbesondere unterhalb der Trägerplatte 2, durch diese hindurch in Richtung der Stellplatte 3, am Rand der Stellplatte 3 vorbei und über diese hinaus. In der in Fig. 1 gezeigten Greif- und Transportvorrichtung 1 dienen die Steuernocken 10 als Öffnungsmittel für die ersten und zweiten Greifarmpaare 8, 9 der jeweiligen Behältergreifeinrichtung 7. Als Schließmittel werden sich anziehende Magnetpaare (nicht dargestellt) zwischen den Greifarmen eines Greifarmpaars verwendet. Die ersten Greifarmpaare 8 sind von der Rotationsachse 5 aus radial orientiert und am Rand der Trägerplatte 2 auf deren Oberseite mit einer Schraube pro Greifarm drehbar bzw. schwenkbar befestigt. Die zweiten Greifarmpaare 9 sind ebenfalls radial zur Achse 5 orientiert und am Rand der Stellplatte 3 auf deren Unterseite mit einer Schraube pro Greifarm schwenkbar befestigt. Auf der Stellplatte 3 sind die Lagerbolzenbohrungen 22 erkennbar, die kreisförmig um die Rotationsachse 5 angeordnet sind, und jeweils zwei benachbarte Bohrungen 22, die jeweils als Aufnahme für etwaige Befestigungen der Greifarme eines zweiten Greifarmpaars 9 dienen. Ein Winkel, der von der Rotationsachse 5 zu zwei benachbarten Greifeinrichtungen 7 gespannt wird, ist bei allen Greifeinrichtungen 7 gleich.

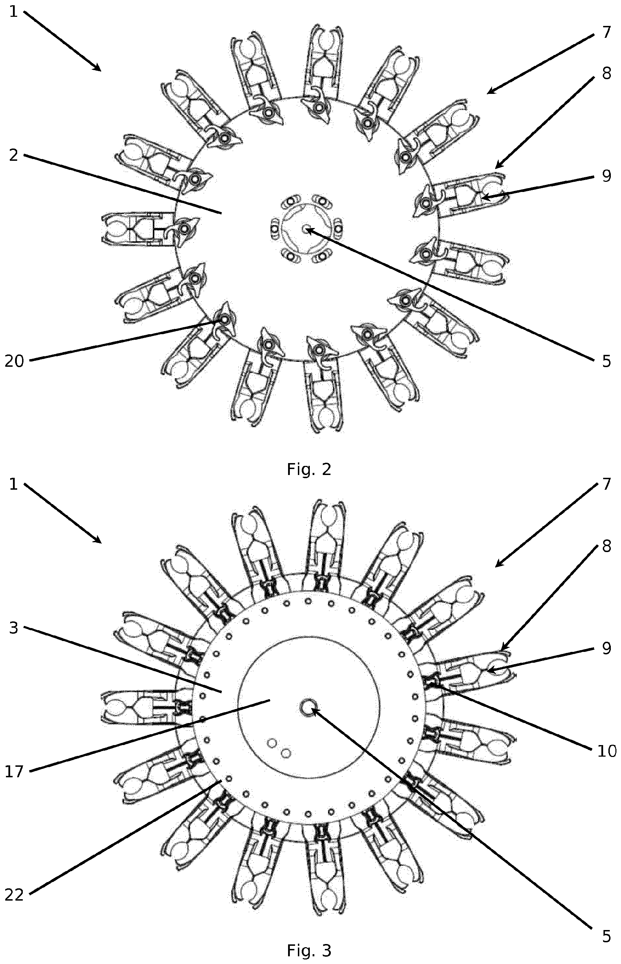

Fig. 2 zeigt eine Unteransicht der Greif- und Transportvorrichtung aus Fig. 1. Hierbei sind im Wesentlichen die kreisförmige Ausbildung der Trägerplatte 2, die konzentrische Anordnung und radiale Ausrichtung der Behältergreifeinrichtungen 7 sowie die Anordnung der Betätigungsklauen 20 kreisförmig um die Rotationsachse 5 deutlich erkennbar. Ansonsten sind alle Elemente und Komponenten der Vorrichtung 1 bereits in Bezug auf Fig. 1 erläutert worden.

Fig. 3 zeigt eine Draufsicht der Greif- und Transportvorrichtung aus Fig. 1. Hierbei ist zusätzlich gut erkennbar, dass der Radius der Stellplatte 3 kleiner als der Radius der Trägerplatte 2 ist. An dem gegenüber der Stellplatte 3 hervorstehenden Rand der Trägerplatte 2 sind die Steuernocken 10 rotierbar lagernd befestigt.

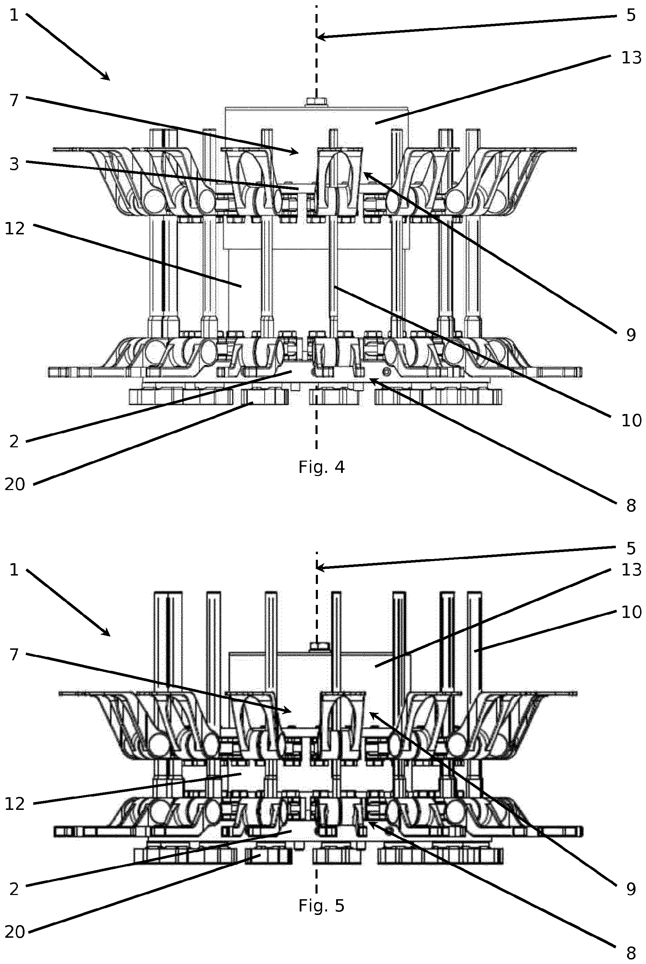

Fig. 4 und 5 zeigen jeweils eine Seitenansicht der Greif- und Transportvorrichtung aus Fig. 1, einmal mit einer stark angehobenen Stellplatte 3 und einmal mit einer nur wenig angehobenen Stellplatte 3. Das bedeutet, dass die Höhenverstellung der Stellplatte 3 in Fig. 4 größer als die Höhenverstellung der Stellplatte in Fig. 5. Durch die Höhenverstellung ändert sich ebenfalls die Position der zweiten Greifarmpaare 9 sowie der Abstand zwischen den ersten und zweiten Greifarmpaaren 8 und 9. Trotz der Höhenverstellbarkeit sind die ersten Greifarmpaare 8 immer auf einer Ebene angeordnet, die zu einer Ebene der zweiten Greifarmpaare 9 stets parallel ausgerichtet ist. Die Vorrichtung 1 ist des Weiteren derart konzipiert und ausgebildet, dass bei maximalem Hub durch die Höhenverstellung der Stellplatte 3 bzw. des zweiten Hohlkörpers 13 der Steuernocken 10 weiterhin zwischen den Greifarmen des zweiten Greifarmpaars 9 angeordnet ist und das zweite Greifarmpaar 9 öffnen kann. Zusätzlich sind der erste und/oder der zweite Hohlkörper 12 und 13 derart angepasst, dass sich kein Zugang zwischen den beiden Hohlkörpern 12, 13 in deren Innenraum bildet. Im anderen Fall, in Fig. 5, bei minimalem bzw. keinem Hub durch die Höhenverstellung der Stellplatte 3 bzw. des zweiten Hohlkörpers 13, ist bei der Konstruktion der Vorrichtung 1 in erster Linie darauf zu achten, dass die ersten Greifarmpaare 8 die zweiten Greifarmpaare 9 nicht berühren oder in Wirkeingriff kommen. Dies ist z.B. dadurch realisierbar, dass die Stellplatte 3 mindestens auf einem Drittel oder auf der Hälfte der Höhe des zweiten Hohlkörpers 13 angeordnet ist und/oder die zweiten Greifarmpaare 9 nicht auf der Unterseite, sondern auf der Oberseite der Stellplatte 3 drehbar lagernd befestigt werden.

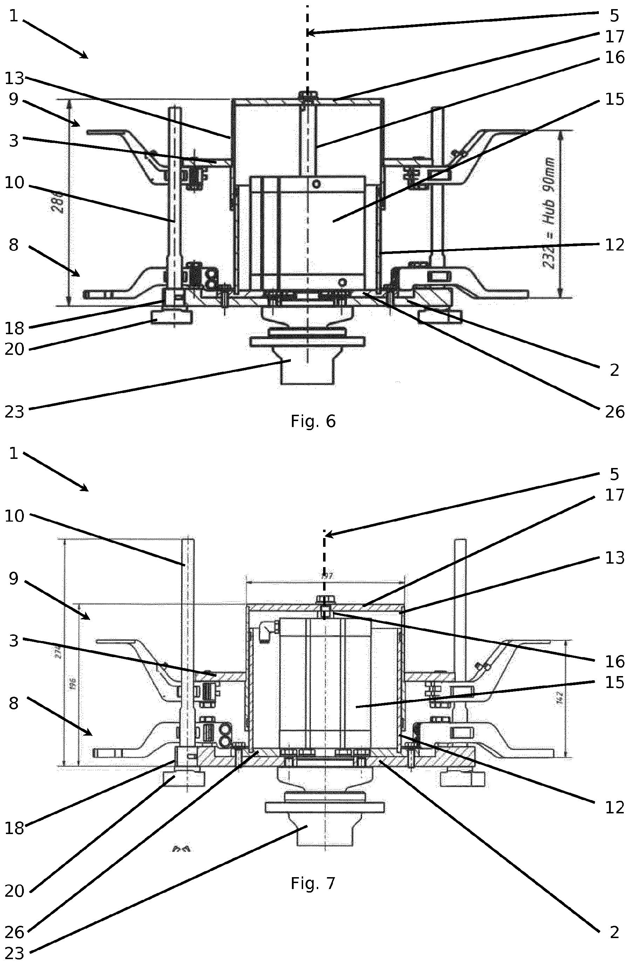

Fig. 6 und 7 zeigen jeweils einen Querschnitt der entsprechenden Greif- und Transportvorrichtung 1 aus Fig. 4 und Fig. 5. Neben den bereits zuvor erläuterten Bauteilen, Komponenten und Elementen der Vorrichtung 1 ist zusätzlich der Innenraum der Hohlkörper 12, 13 abgebildet, in dem ein Linearantrieb 15 angeordnet und auf der Trägerplatte 3 befestigt ist. Der Linearantrieb 15 ist mit einer Hubwelle 16 ausgestattet, die koaxial zur Rotationsachse 5 verläuft und an der Abdeckung 17 in dessen Mittelpunkt befestigt ist. Da die Abdeckung 17 mit dem zweiten Hohlkörper 13 fest verbunden ist, wird für die Höhenverstellung der Vorrichtung die Hubwelle 16 durch den Linearantrieb 15 linear zur Achse 5 verschoben und somit die Abdeckung 17, der zweite Hohlkörper 13 sowie die Stellplatte 3 und die darauf montierten zweiten Greifarmpaare 9 angehoben bzw. abgesenkt.

In Fig. 6 ist die Hubwelle 16, im Vergleich zu der in Fig. 7, weiter aus dem Linearantrieb 15 herausgefahren. Dadurch haben die Greifarmpaare 8, 9 beispielsweise einmal einen Abstand von 232mm (siehe Fig. 6) und einmal von 142mm (siehe Fig. 7), wodurch ein Hub von 90mm erreicht wird. Des Weiteren ist ein Befestigungsflansch 26 erkennbar, auf dem der erste Hohlkörper 12 befestigt ist. Der Befestigungsflansch 26 selbst ist mittels Schrauben auf der Trägerplatte 2 in deren Mitte befestigt und hilft, dass die zweiten Greifarmpaare 9 senkrecht über den ersten Greifarmpaaren 8 wie vorbestimmt angeordnet werden. An diesem Punkt ist festzuhalten, dass die Trägerplatte 2 und die Stellplatte 3 stets die gleiche Rotationsgeschwindigkeit haben, um ein Verzerren/Verkippen der Behältergreifeinrichtungen 7 bzw. ein Verdrehen der zweiten Greifarmpaare 9 um einen Winkel bzw. um die Rotationsachse 5 gegenüber den ersten Greifarmpaaren 8 zu unterbinden. Im Rand der Trägerplatten 2 sind Lageraufnahmen 18 für die Steuernocken 10 erkennbar, die dem drehbaren Lagern und Befestigen der Steuernocken 10 dienen und entsprechend ausgebildet sind.

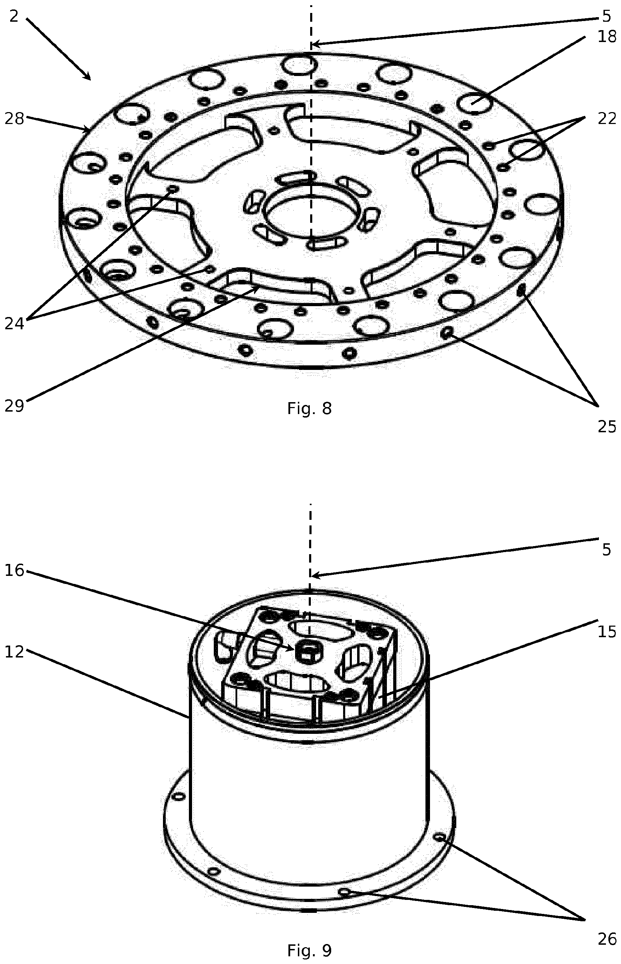

Fig. 8 zeigt eine perspektivische Ansicht einer Trägerplatte 2 einer Greif- und Transportvorrichtung aus Fig. 1. Die Trägerplatte 2 weist einen breiten, durchgehenden Ring 28 sowie ein innerhalb des Rings 28 ausgebildetes Speichenelement 29 auf. Der Ring 28 ist mit einer Vielzahl von Befestigungsmöglichkeiten für erste Greifarmpaare 8 ausgestattet, wobei jede Befestigungsmöglichkeit aus einer Lageraufnahme 18 und zwei zur Aufnahme benachbarten Lagerbolzenbohrungen 22 gebildet ist. Damit die Steuernocken (nicht dargestellt) nicht aus den Lageraufnahmen 18 herausgenommen werden können, werden stiftförmige Elemente (nicht dargestellt) durch seitlich am Rand des Rings 28 angeordnete/ausgebildete Bohrungen 25 eingeführt, die zur korrespondierenden Lageraufnahme 18 führen. Die zuvor genannten stiftförmigen Elemente kommen mit dem Steuernocken derart in Wirkeingriff, dass der Steuernocken noch rotieren, aber nicht mehr aus der Lageraufnahme 18 herausgezogen werden kann - z.B. durch ein tangential zum Steuernocken ausgebildetes Feder-Nut-System. Des Weiteren ist das Speichenelement 29 mit sechs Speichen ausgebildet, die mit dem Ring 28 fest verbunden sind und jeweils eine Befestigungsbohrung 24 zum Befestigen des Befestigungsflanschs (nicht dargestellt) des ersten Hohlkörpers aufweisen. Alle zuvor genannten Elemente der Trägerplatte 2 sind konzentrisch um die Rotationsachse 5, die durch den Mittelpunkt der Trägerplatte 2 verläuft, angeordnet.

Fig. 9 zeigt eine perspektivische Ansicht eines ersten Hohlkörpers 12 mit angeordnetem Linearantrieb 15 einer Greif- und Transportvorrichtung aus Fig. 1. An der Unterseite des ersten hohlzylinderförmigen Hohlkörpers 12 ist ein Befestigungsflansch 26 zum Befestigen auf der Trägerplatte (nicht dargestellt) angeordnet und befestigt. Zusätzlich ist im Hohlraum des Hohlkörpers 12 ein mittig zur Rotationsachse 5 angeordneter Linearantrieb 15 mit Hubwelle 16 erkennbar.

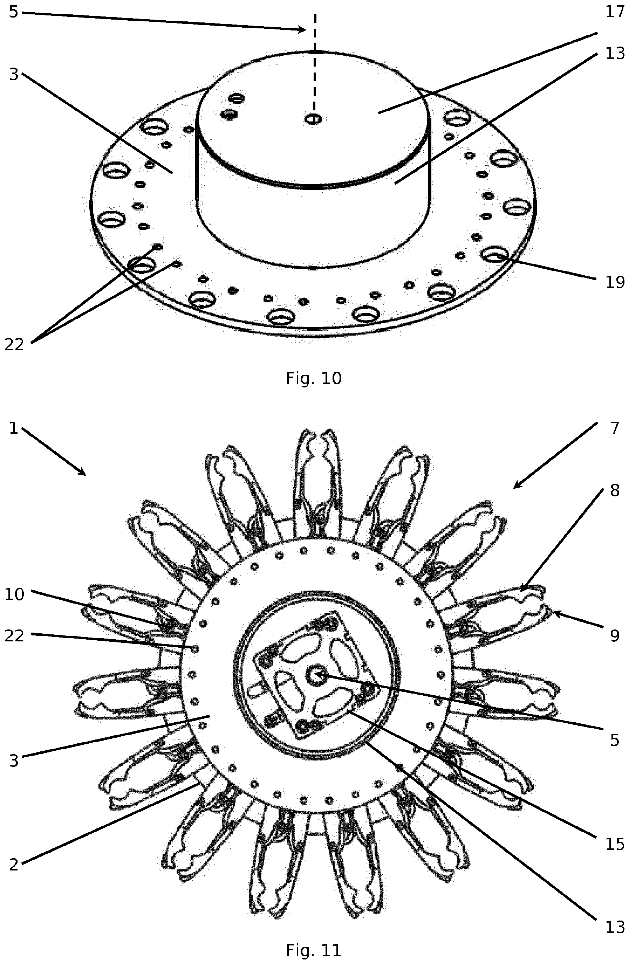

Fig. 10 zeigt eine perspektivische Ansicht eines zweiten Hohlkörpers 13 mit einer Stellplatte 3 von einer erfindungsgemäßen Greif- und Transportvorrichtung. Die Stellplatte 3 aus Fig. 10 unterscheidet sich von der Stellplatte aus Fig. 1 dahingehend, dass zusätzlich eine Vielzahl von Lageraufnahmen 19 für die Steuernocken (nicht dargestellt) konzentrisch am Rand der Stellplatte 3 ausgebildet sind. Diese Lageraufnahmen 19 helfen, unabhängig von der Position bzw. Höhe der Stellplatte 3, die Steuernocken zwischen den an der Stellplatte 3 montierten Greifarmen (nicht dargestellt) korrekt auszurichten bzw. anzuordnen und insbesondere eine Auslenkung und/oder Biegung der Steuernocken zu unterbinden. Des Weiteren wurde bereits zuvor erläutert, dass die Stellplatte 3 auf einer bestimmten Höhe angeordnet und senkrecht zur Mantelfläche des zweiten Hohlkörpers 13 ausgerichtet und befestigt ist.

Fig. 11 zeigt eine weitere modifizierte Draufsicht der Greif- und Transportvorrichtung aus Fig. 3, wobei man zusätzlich die Anordnung des Linearantriebs 15 auf Grund der fehlenden Abdeckung erkennt.

### Bezuaszeichenliste

- 1: Greif- und Transportvorrichtung/Klammerstern
- 2: Trägerplatte
- 3: Stellplatte
- 4: (frei)
- 5: Rotationsachse
- 6: (frei)
- 7: Behältergreifeinrichtung
- 8: erstes Greifarmpaar
- 9: zweites Greifarmpaar
- 10: Steuernocken
- 11: (frei)
- 12: erster Hohlkörper
- 13: zweiter Hohlkörper
- 14: (frei)
- 15: Linearantrieb
- 16: Hubwelle
- 17: Abdeckung
- 18: Lageraufnahme (in Trägerplatte für Steuernocken)
- 19: Lageraufnahme (in Stellplatte für Steuernocken)
- 20: Betätigungsklaue/-element
- 21: (frei)
- 22: Lagerbolzenbohrung
- 23: Antriebswelle
- 24: Befestigungsbohrung (für ersten Hohlkörper)
- 25: Aufnahme für Lagerbefestigung
- 26: Befestigungsflansch
- 27: (frei)
- 28: Ring (der Trägerplatte)
- 29: Speichenelement (der Trägerplatte)

## Patentansprüche

1. Greif- und Transportvorrichtung (1) zum Greifen, Halten, Führen und Transportieren von insbesondere flaschenartigen Behältern, mit einer Trägerplatte (2) und einer Stellplatte (3), die um eine Rotationsachse (5) der Vorrichtung (1) rotierbar sind, wobei die Vorrichtung (1) wenigstens eine Behältergreifeinrichtung (7) mit mindestens einem ersten Greifarmpaar (8), mindestens einem zweiten Greifarmpaar (9) und mit einem Steuernocken (10) als Öffnungs- oder Schließmittel der Greifarmpaare (8, 9) der wenigstens einen Behältergreifeinrichtung (7) aufweist, wobei das mindestens eine erste Greifarmpaar (8) an der Trägerplatte (2) und das mindestens eine zweite Greifarmpaar (9) an der Stellplatte (3) schwenkbar befestigt sind, wobei die Greifarmpaare (8, 9) der wenigstens einen Behältergreifeinrichtung (7) mittels deren Steuernockens (10) von einer Greifstellung in eine Öffnungsstellung oder umgekehrt bewegbar sind, wobei die Trägerplatte (2) einen ersten Hohlkörper (12) aufweist, und wobei die Stellplatte (3) gegenüber der Trägerplatte (2) entlang der Rotationsachse (5) höhenverstellbar ist, **dadurch gekennzeichnet, dass**
die Stellplatte (3) einen zweiten Hohlkörper (13) aufweist, der erste und zweite Hohlkörper (12, 13) als Hohlzylinder mit gleicher Höhe ausgebildet, zur Rotationsachse (5) der Vorrichtung (1) koaxial angeordnet und bei einer Höhenverstellung der Stellplatte (3) ineinander verschiebbar sind, wobei die Greif- und Transportvorrichtung (1) einen Linearantrieb (15) zur Höhenverstellung der Stellplatte (3) aufweist, wobei der Linearantrieb (15) innerhalb des ersten Hohlkörpers (12) an der Trägerplatte (2) befestigt und mit dem zweiten Hohlkörper (13) fest verbunden ist.

2. Greif- und Transportvorrichtung nach Anspruch 1,
**dadurch gekennzeichnet, dass**
die Hohlkörper (12, 13) rotationssymmetrisch ausgebildet sind und Führungsmittel aufweisen, die zwischen den Hohlkörpern (12, 13) gegenseitig formschlüssig in Wirkeingriff stehen und ein gegenseitiges Verdrehen der Hohlkörper (12, 13) unterbinden.

3. Greif- und Transportvorrichtung nach Anspruch 1 oder 2,
**gekennzeichnet durch**
einen dritten Hohlkörper, der zwischen dem ersten und zweiten Hohlkörper (12, 13) anordbar und axial verschiebbar und angepasst ist, vom zweiten Hohlkörper (13) ab einem vorbestimmten Punkt angehoben zu werden.

4. Greif- und Transportvorrichtung nach einem der Ansprüche 1 bis 3,
**dadurch gekennzeichnet, dass**
der Linearantrieb (15) eine Hubwelle (16) aufweist, die koaxial zur Rotationsachse (5) der Vorrichtung (1) angeordnet und an einer Abdeckung (17) des zweiten Hohlkörpers (13) befestigt ist.

5. Greif- und Transportvorrichtung nach einem der Ansprüche 1 bis 4,
**dadurch gekennzeichnet, dass**
die Länge des Steuernockens (10) der wenigstens einen Behältergreifeinrichtung (7) größer als ein maximaler Hub der Stellplatte (3) bei der Höhenverstellung ist.

6. Greif- und Transportvorrichtung nach einem der Ansprüche 1 bis 5,
**dadurch gekennzeichnet, dass**
die Trägerplatte (2) mindestens eine Lageraufnahme (18) für den Steuernocken (10) der mindestens einen Behältergreifeinrichtung (7) aufweist, um den Steuernocken (10) drehbar lagernd zu befestigen.

7. Greif- und Transportvorrichtung nach einem der Ansprüche 1 bis 6, **dadurch gekennzeichnet, dass**
die Stellplatte (3) und/oder das mindestens eine zweite Greifarmpaar (9) mindestens eine Führungsaufnahme für den Steuernocken (10) der mindestens einen Behältergreifeinrichtung (7) aufweist, um den Steuernocken (10) drehbar lagernd axial zu führen.

## Claims

1. A gripping and transporting device (1) for gripping, holding, guiding and transporting in particular bottle-like containers which comprises a supporting plate (2) and a positioning plate (3) which are rotatable about a rotational axis (5) of the device (1), wherein the device (1) comprises at least one container gripping device (7) having at least one first gripper arm pair (8), at least one second gripper arm pair (9), and a control cam (10) as an opening or closing means for the gripper arm pairs (8, 9) of the at least one container gripping device (7), wherein the at least one first gripper arm pair (8) is pivotably secured to the supporting plate (2) and the at least one second gripper arm pair (9) is pivotably secured to the positioning plate (3), wherein the gripper arm pairs (8, 9) of the at least one container gripping device (7) can be moved from a gripping position into an open position or vice-versa by means of their control cams (10), wherein the supporting plate (2) comprises a first hollow body (12), and wherein the positioning plate (3) is adjustable in height along the rotational axis (5) relative to the supporting plate (2),
**characterized in that**
the positioning plate (3) comprises a second hollow body (13), the first and second hollow bodies (12, 13) being designed as hollow cylinders of the same height which are arranged coaxially with the rotational axis (5) of the device (1) and can be moved into each other upon the height of the positioning plate (3) being adjusted, wherein the gripping and transporting device (1) has a linear drive (15) for adjusting the height of the positioning plate (3), wherein the linear drive (15) is secured to the supporting plate (2) within the first hollow body (12) and fixedly connected to the second hollow body (13).

2. The gripping and transporting device according to claim 1, **characterized in that**
the hollow bodies (12, 13) are rotationally symmetric and comprise guide means in reciprocally positive operative engagement between the hollow bodies (12, 13) and which prevent a rotating of the hollow bodies (12, 13) relative to one another.

3. The gripping and transporting device according to claim 1 or 2, **characterized by**
a third hollow body positionable between the first and second hollow bodies (12, 13) and axially displaceable and adapted to be lifted by the second hollow body (13) as of a predetermined point.

4. The gripping and transporting device according to one of claims 1 to 3, **characterized in that**
the linear drive (15) has a lift shaft (16) arranged coaxially with the rotational axis (5) of the device (1) and secured to a cover (17) of the second hollow body (13).

5. The gripping and transporting device according to one of claims 1 to 4, **characterized in that**
the length of the control cam (10) of the at least one container gripping device (7) is greater than a maximum lift of the positioning plate (2) during the height adjustment.

6. The gripping and transporting device according to one of claims 1 to 5, **characterized in that**
the supporting plate (2) has at least one bearing seat (18) for the control cam (10) of the at least one container gripping device (7) in order to secure the control cam (10) in a rotatably mounted manner.

7. The gripping and transporting device according to one of claims 1 to 6, **characterized in that**
the positioning plate (2) and/or the at least one second gripper arm pair (9) comprises at least one guide seat for the control cam (10) of the at least one container gripping device (7) in order to axially guide the control cam (10) in a rotatably mounted manner.

## Revendications

1. Dispositif de préhension et de transport (1) pour saisir, maintenir, guider et transporter des récipients en particulier en forme de bouteille, comportant une plaque de support (2) et une plaque de réglage (3), qui peuvent tourner autour d'un axe de rotation (5) du dispositif (1),
dans lequel
le dispositif (1) comprend au moins un organe de préhension de récipient (7) pourvu d'au moins une première paire de bras de préhension (8), d'au moins une deuxième paire de bras de préhension (9) et d'une came de commande (10) à titre de moyen d'ouverture ou de fermeture des paires de bras de préhension (8, 9) dudit au moins un organe de préhension de récipient (7),
ladite au moins une première paire de bras de préhension (8) est fixée de manière pivotante à la plaque de support (2) et ladite au moins une deuxième paire de bras de préhension (9) est fixée de manière pivotante à la plaque de réglage (3),
les paires de bras de préhension (8, 9) dudit au moins un organe de préhension de récipient (7) peuvent être déplacées d'une position de préhension à une position d'ouverture, ou inversement, à l'aide de sa came de commande (10),
la plaque de support (2) présente un premier corps creux (12), et
la plaque de réglage (3) est réglable en hauteur par rapport à la plaque de support (2) le long de l'axe de rotation (5),
**caractérisé en ce que**
la plaque de réglage (3) présente un deuxième corps creux (13), les premier et deuxième corps creux (12, 13) sont réalisés sous forme de cylindres creux de même hauteur, sont disposés coaxialement par rapport à l'axe de rotation (5) du dispositif (1) et peuvent être déplacés l'un dans l'autre lors d'un réglage en hauteur de la plaque de réglage (3),
le dispositif de préhension et de transport (1) comprend un entraînement linéaire (15) pour le réglage en hauteur de la plaque de réglage (3), l'entraînement linéaire (15) est fixé à la plaque de support (2) à l'intérieur du premier corps creux (12) et est solidaire du deuxième corps creux (13).

2. Dispositif de préhension et de transport selon la revendication 1, **caractérisé en ce que**
les corps creux (12, 13) sont réalisés à symétrie de révolution et présentent des moyens de guidage qui sont en prise active mutuelle par coopération de forme entre les corps creux (12, 13) et empêchent une rotation mutuelle des corps creux (12, 13).

3. Dispositif de préhension et de transport selon la revendication 1 ou 2, **caractérisé par**
un troisième corps creux qui peut être agencé et déplacé axialement entre les premier et deuxième corps creux (12, 13) et qui est adapté pour être soulevé depuis le deuxième corps creux (13) à partir d'un point prédéterminé.

4. Dispositif de préhension et de transport selon l'une des revendications 1 à 3,
**caractérisé en ce que**
l'entraînement linéaire (15) comprend un arbre de levage (16) agencé coaxialement à l'axe de rotation (5) du dispositif (1) et fixé à un couvercle (17) du deuxième corps creux (13).

5. Dispositif de préhension et de transport selon l'une des revendications 1 à 4,
**caractérisé en ce que**
la longueur de la came de commande (10) dudit au moins un organe de préhension de récipient (7) est supérieure à une course maximale de la plaque de réglage (3) lors du réglage en hauteur.

6. Dispositif de préhension et de transport selon l'une des revendications 1 à 5,
**caractérisé en ce que**
la plaque de support (2) présente au moins un logement de montage (18) pour la came de commande (10) dudit au moins un organe de préhension de récipient (7), afin de fixer la came de commande (10) avec montage mobile en rotation.

7. Dispositif de préhension et de transport selon l'une des revendications 1 à 6,
**caractérisé en ce que**
la plaque de réglage (3) et/ou ladite au moins une deuxième paire de bras de préhension (9) présente au moins un logement de guidage pour la came de commande (10) dudit au moins un organe de préhension de récipient (7), afin de guider axialement la came de commande (10) avec montage mobile en rotation.
